(19) Europäisches Patentamt

European Patent Office

Office européen des brevets

(11) **EP 0 600 376 B1**

(12) **EUROPEAN PATENT SPECIFICATION**

(45) Date of publication and mention
of the grant of the patent:
**09.02.2000 Bulletin 2000/06**

(51) Int. Cl.[7]: **H04N 5/783**, H04N 5/956,
G11B 15/467, H04N 9/896

(21) Application number: **93119007.8**

(22) Date of filing: **25.11.1993**

(54) **Magnetic recording/reproducing apparatus for carrying out high-speed reproduction with use of line memory**

Magnetisches Aufzeichnungs-/Wiedergabegerät zur Verwirklichung von Hochgeschwindigkeitswiedergaben durch einen Linienspeicher

Appareil d'enregistrement/reproduction magnétique pour réaliser une reproduction à grande vitesse avec usage d'une mémoire de ligne

(84) Designated Contracting States:
**DE GB**

(30) Priority: **30.11.1992 JP 31973592**

(43) Date of publication of application:
**08.06.1994 Bulletin 1994/23**

(73) Proprietor: **HITACHI, LTD.**
**Chiyoda-ku, Tokyo (JP)**

(72) Inventors:
 • **Okamoto, Kaneyuki**
  **Katsuta-shi (JP)**
 • **Nishijima, Hideo**
  **Katsuta-shi (JP)**
 • **Yukinobu, Tada**
  **Katsuta-shi (JP)**

 • **Kitade, Takeshi**
  **MA. 02148 (US)**
 • **Nakamoto, Toshio**
  **Katsuta-shi (JP)**

(74) Representative:
**Altenburg, Udo, Dipl.-Phys. et al**
**Patent- und Rechtsanwälte**
**Bardehle . Pagenberg . Dost . Altenburg .**
**Geissler . Isenbruck**
**Galileiplatz 1**
**81679 München (DE)**

(56) References cited:
**EP-A- 0 160 398**      **EP-A- 0 224 186**
**EP-A- 0 421 486**      **DE-A- 4 200 357**
**US-A- 4 709 276**

**Description**

BACKGROUND OF THE INVENTION

The present invention relates to a magnetic recording/reproducing apparatus and particularly relates to a magnetic recording/reproducing apparatus for carrying out high speed review and cue at a speed increased by a factor of from the order of tens of times to the order of hundreds of times compared with the speed at the time of recording.

As an example of a conventional technique similar to this type apparatus, there is a method which has been preliminarily invented by the inventors of the present invention and has been described in JP-B-63-51592. The method is adapted to the case where noise bars appear on a display or color shift or displacement occurs because a large deviation is produced between the tape running speed and the rotary head speed when a magnetic tape is made to run at a speed different from the speed at the time of recording. That is, the method is provided to change the rotational speed of the rotary head to thereby make the relative speed coincident with that at the time of recording. As another method, there is a method which has been described in JP-A-1-221075. The method is provided to perform line interpolation and line thinning-out on a reproduced video signal in a high-speed speed change reproduction mode by using a one-field memory to thereby match a field period with a desired display period (about 1/60 sec).

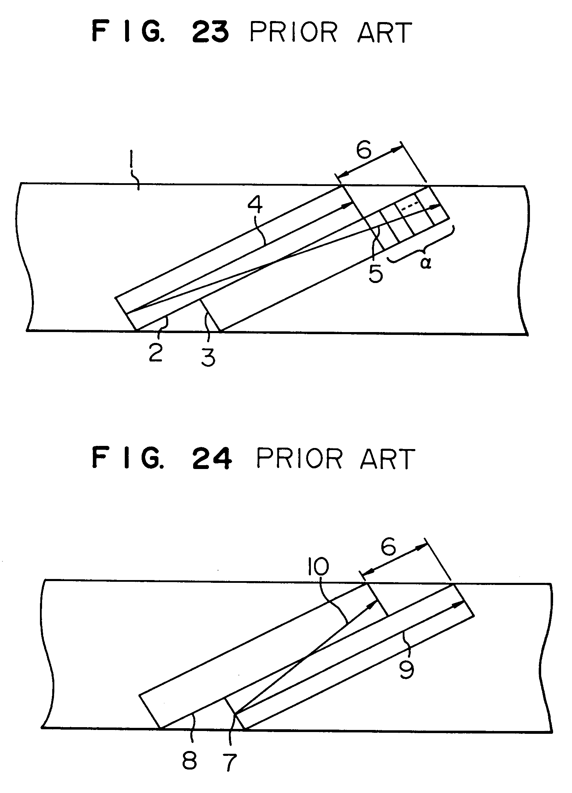

Referring to Figs. 23 and 24, the outlines of these conventional techniques will be described below. In Figs. 23 and 24, the reference numeral 1 designates a magnetic tape; 2, 3, 7 and 8, track patterns recorded on the tape; 4, 5, 9 and 10, loci of scanning of a head at the time of reproduction; and 6, a difference produced between the loci of scanning of the head. The locus of scanning at the time of recording is coincident with the reference numeral 4 in Fig. 23. When, for example, the tape is stopped in the case where the tape running direction is coincident with the head rotating direction, the locus of the head is changed as represented by the reference numeral 5 so that a portion subjected to scanning is increased by the difference 6. When, on the contrary, the tape is made to run at a speed twice as much as the aforementioned speed, the locus of the head is changed as represented by the reference numeral 10 so that a portion subjected to scanning is decreased by the same difference 6. When the difference 6 is represented by the number $\alpha$ of horizontal synchronizing signals written in the difference 6, the number of horizontal synchronizing signals which exist in the difference at the time of N-fold speed reproduction is represented by $\alpha \times (N-1)$. A method to change the rotational speed of the rotary head to thereby cancel the difference is the method described in JP-B-63-51592. A method to store once the difference in the field memory before line interpolation/line thinning-out is the method described in JP-A-1-221075. In the case of an NTSC signal in which the number L of scanning lines per one field is 262.5, the change of the speed of the rotary head is represented by $\alpha \times (N-1)/262.5$.

In the case where high-speed searching is performed by these conventional techniques, a large number of problems arise as follows:

1) increase in cost occurs because a field memory is required;
2) an image as squeezed out of shape is produced though, for example, means of inserting a single color signal in upper and lower portions of a display, or the like, may be considered to perform interpolation easily;
3) a large-scale circuit is required for performing line interpolation/line thinning-out on the basis of arithmetic operations;
4) it is impossible to obtain a speed higher than about a 20-fold speed because of the performance of the television set in which the vertical synchronization frequency is changed in the case where matching is performed only on the basis of the horizontal synchronization frequency without line interpolation/line thinning-out;
5) there is a risk of reckless driving of a rotary head driving motor or a risk of unstable rotation if complex protection is not applied in the case where

the horizontal synchronizing signal is used for controlling the rotary head; and so on.

In the case of a magnetic recording/reproducing apparatus for home use, it is general that azimuth recording in which recording is performed by heads different in azimuth angle as a head gap angle while tracks are set to be adjacent to each other is used in order to increase information recording density. With respect to a color signal, there is provided means of shifting the phase of the color signal by 90 degrees or inverting the phase at the time of recording on one hand and adding signals of adjacent tracks to each other to remove adjacent interference components at the time of reproduction on the other hand. Further, a color phase stabilizer for performing color decoding stably is provided in the posterior stage and functions so that a signal called "burst signal" which is a reference for reproduced color is automatically locked with a predetermined reference (sub-carrier) signal. The aforementioned color processing cannot function sufficiently at the time of high-speed reproduction, because track crossing occurs frequently. As a result, a desired color cannot be reproduced or color missing occurs.

EP-A-0 224 186 discloses an apparatus for controlling a recording operations which applies to a normal reproduction mode.

## SUMMARY OF THE INVENTION

To solve the aforementioned problems and to perform very-high-speed speed change reproduction, the apparatus as defined in claim 1 is provided.

The time axis of line data to be written or read is converted in accordance with the frequency ratio of the write clock signal to the read clock signal whenever memory access is carried out. The case where the frequency of the write clock signal is fixed and the frequency of the read clock signal is made variable may be considered. Or the case where both the frequency of the write clock signal and the frequency of the read clock signal are made variable may be considered. Above all, in the these cases, the same function is fulfilled. The aforementioned memory unit stores a video signal with about one scanning line as one unit. In the case where the signal is to be compressed in the time axis in accordance with the tape running speed, the signal is stored in synchronism with a high-frequency clock signal. In the reverse case, the signal is stored in synchronism with a low-frequency clock signal. Reading is performed in synchronism with a clock signal having a predetermined frequency. As a result, the time axis of a signal widely out of the synchronization pull-in range of the television set due to the change of the relative speed is returned to the original time axis so that a predetermined synchronizing signal period is obtained. In this specification, this is called "time-axis conversion". The time-axis conversion of the signal is performed by this function to put the signal in the synchronization pull-in range of the television set, so that the recorded image contents can be observed at the time of high-speed tape running. It is necessary that the write clock generating unit has a wide operating range capable of being adapted to very-high-speed tape running and is provided to obtain stable oscillation. There is however no risk of reckless driving of a cylinder motor, because the memory capacity required is very small and because the horizontal synchronizing signal has no relation with rotary head control.

As described above, according to the present invention, the following effects can be realized:

1) Very-high-speed review and cue can be provided by using a very-low-cost line memory compared with a field memory;

2) An unnatural image as squeezed out of shape can be avoided;

3) The invention can be provided by a simple circuit without necessity of carrying out arithmetical operations with respect to difference between scanning lines, etc.;

4) The invention can be provided without changing the rotary head speed to thereby make the motor servo control easy, and

5) There is no necessity of changing the rotary head speed on the basis of periodic data of a reproduced horizontal synchronizing signal, so that there is no risk of reckless driving or the like.

## BRIEF DESCRIPTION OF THE DRAWINGS

Fig. 1 is a block diagram showing a first embodiment of the present invention;
Figs. 2A, 2B and 2C are views of waveforms at important potions in the first embodiment of the present invention;
Fig. 3 is a graph for explaining the operation of the first embodiment of the present invention;
Fig. 4 is a graph for explaining the operation of the first embodiment of the present invention;
Fig. 5 is a graph for explaining the operation of the first embodiment of the present invention;
Fig. 6 is a graph for explaining the operation of the first embodiment of the present invention;
Fig. 7 is an auxiliary view for explaining a color signal processing of the prior art;
Fig. 8 is an auxiliary view for explaining a a color phase stabilizer of the prior art;
Fig. 9 is an auxiliary view for explaining a further embodiment of the present invention;
Figs. 10A and 10B are views showing an effect attained by a further embodiment of the present invention;
Figs. 11A and 11B are views showing an effect attained by a further embodiment of the present invention;
Fig. 12 is a block diagram showing a further embodiment of the present invention;
Fig. 13 is a view for explaining the embodiment of Fig. 12;
Fig. 14 is a view for explaining the embodiment of Fig. 12;
Fig. 15 is a view for explaining the embodiment of Fig. 12;
Fig. 16 is a view for explaining the embodiment of Fig. 12;
Fig. 17 is a view for explaining the embodiment of Fig. 12;
Fig. 18 is a view for explaining the embodiment of Fig. 12;
Fig. 19 is a block diagram showing a further embodiment of the present invention;
Fig. 20 is a block diagram showing constituent elements of the embodiment of Fig. 19;
Fig. 21 is a view of waveforms at important portions of the embodiment of Fig. 19;
Fig. 22 is a view of waveforms at important portions of the embodiment of Fig. 19;
Fig. 23 is a view for explaining the operation of a conventional apparatus; and
Fig. 24 is a view for explaining the operation of a conventional apparatus.

DESCRIPTION OF THE PREFERRED EMBODIMENTS

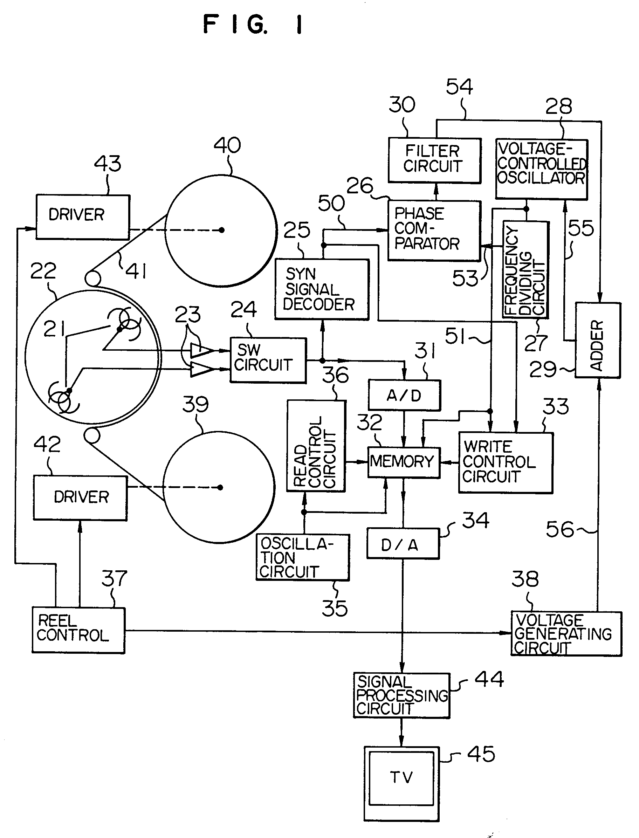

Referring to Fig. 1 which is a block diagram, an embodiment of the present invention will be described below. In Fig. 1, the reference numeral 21 designates a rotary head; 22, a rotary cylinder; 23, a reproduction amplifier; 24, a switching circuit (SW circuit); 25, a sync signal decoder; 26, a phase comparator; 27, a frequency dividing circuit; 28, a voltage-controlled oscillator; 29, an adder; 30, a filter circuit; 31, an analog-to-digital converter (A/D converter); 32, a memory having a memory capacity for at least one line; 33, a write control circuit; 34, a digital-to-analog converter (D/A converter); 35, a fixed frequency oscillation circuit; 36, a read control circuit; 37, a reel control circuit; 38, a voltage generating circuit; 39, a (tape) supply reel; 40, a (tape) take-up reel; 41, a magnetic tape; 42 and 43, reel drivers; 44, a signal processing circuit; and 45, a television (TV) set (or a video monitor).

The outline of the operation of the aforementioned apparatus will be described below. In the following description, "sync signal" represents a horizontal synchronizing signal.

The rotating head 21 mounted onto the rotary cylinder 22 so as to be in contact with the magnetic tape 41 picks up reproduction signals from the tape. The signals are amplified by the reproduction amplifier 23 and switched by the SW circuit 24, so that a time-continuous reproduction signal is obtained. In this case, the SW circuit 24 performs switching to select a reproduction signal for a head element being in contact with the magnetic tape 41 in accordance with a judgment as to which head element of two head elements of the rotating head is in contact with the magnetic tape 41. This timing is generally obtained by detecting through a sensor (not shown) a magnetic field produced by a magnet (not shown) mounted to the rotary cylinder 22. The reproduction signal thus obtained is applied to the sync signal decoder 25 on one hand so that it is used for sync signal extraction. The reproduction signal is converted into a digital signal on the other hand so that time axis conversion for expanding/contracting the time axis of line is carried out by passing of the signal through a memory circuit. The former sync signal detected by the sync signal decoder 25 makes up a reference signal for a phase-locked loop which is constituted by the phase comparator 26, the frequency dividing circuit 27, the voltage-controlled oscillator 28, the filter circuit 30 and so on. That is, a high-frequency clock signal oscillated by the voltage-controlled oscillator 28 is frequency-divided by the frequency dividing circuit 27 and controlled with respect to frequency (inclusive of phase) by the phase comparator 26 so that the phase of the resulting signal has a predetermined relation with the phase of the sync signal detected as described above. At this time, a signal band-limited by the filter circuit 30 and a signal generated by the voltage generating circuit 38 are added in the adder 29 so that the resulting signal operates to control the frequency of the voltage-controlled oscillator 28 to thereby form the aforementioned state (in which two input signals of the phase comparator 26 are phase-locked. When the frequency of the signal phase-locked with the sync signal recorded on the tape is changed, that is, when the frequency of the sync signal is changed, a clock signal 51 with its frequency changed in response to the change of the frequency of the sync signal is obtained. This operation is described later in detail.

Writing of information into the memory 32 is performed in synchronism with the clock signal 51 having its frequency changed in accordance with the sync signal as described above, and the timing for accessing the head address of the memory is required. This memory access is also carried out in synchronism with the reproduced sync signal. Upon reception of the sync signal, the write control circuit 33 generates such timing pulses. On the read side, reading is performed on the basis of a predetermined frequency generated by the oscillation circuit 35, and there is also required to return the read position of the memory 32 to the head address in the timing of reading of one-scanning-line's data. The read control circuit 36 is provided for this purpose. The signal read from the memory 32 and subjected to time-axis conversion is converted into an analog signal by the D/A converter 34 and further converted into a signal such as an RF signal, a video signal, etc. by the signal processing circuit 44 as a stage posterior to the stage of the D/A converter 34, so that the resulting signal is applied to the television set 45. Further, the target reproduction speed in this embodiment is very high. Therefore, a voltage for substantially changing the voltage to be applied to the voltage-controlled oscillator 28 is generated in the voltage generating circuit 38 and then added to the phase-locked voltage of the sync signal, so that the resulting voltage is given to the voltage-controlled oscillator 28. As a result, a desired time-axis converting operation can be carried out in a very wide range.

In the following, a magnetic tape driving portion will be described. Examples of the driving system include a capstan driving system in which a tape is driven while nipped between a pinch roller and a capstan (not shown), a reel driving system in which a reel is driven, and so on. In the following description, the reel driving system is shown as an example. The reel driving system is adapted to high-speed tape running such as rewinding, fast feeding, etc. because supply and take-up reels 39 and 40 are driven by separate motors or by a single motor so that a large amount of driving force is produced. In the case of a single motor, a reel to which the driving force is to be transmitted is selected functionally by switching. As shown in this embodiment, driving sources are, in most cases, provided for the respective reels separately. The selection as to whether a single motor is used or whether separate motors are used has a relation with system cost or the like but has no relation with the substance of the present invention (any case may be selected). The required is a control system in which a stable head touch is obtained at a high speed of a certain degree for the purpose of observation of a reproduced image at a high searching speed which cannot be obtained conventionally. An example of the control system is already existent as a known technique (for example, tape driving system for composite digital VTR (D2) described in Television Society Technical Report, Vol. 14, No. 41, pp. 7-12, Aug. 1990). Controls in this system are, in most cases, carried out by a microcomputer. In this embodiment, these controls are generically represented by the reel control circuit 37.

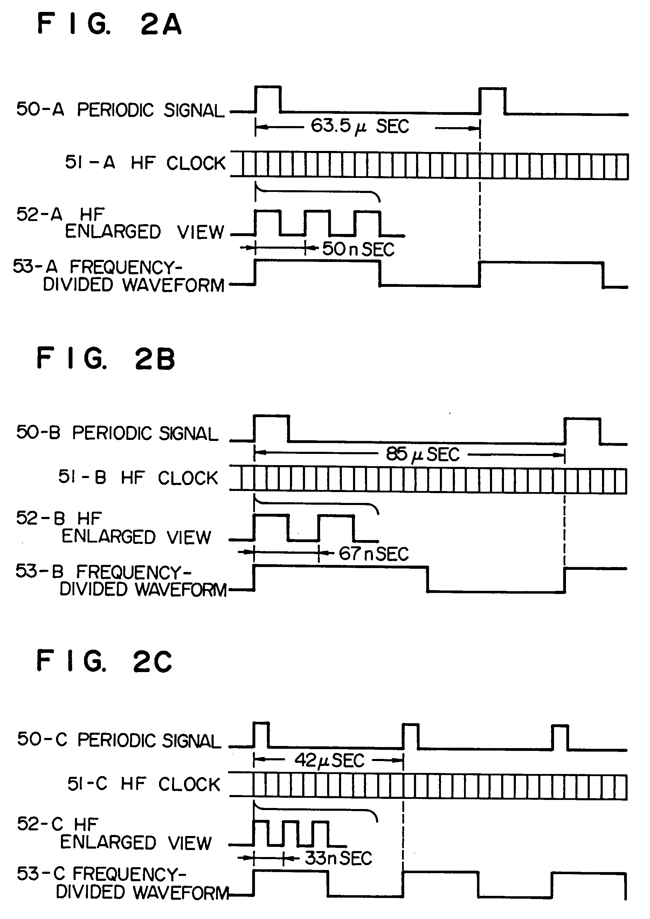

Referring to the waveform views of Figs. 2A to 2C, the time-axis converting operation which has been described briefly will be described in detail.

In Figs. 2A to 2C, the reference numerals 50 to 53 classified by the symbols -A, -B and -C designate electric signals shown in Fig. 1. Figs. 2A, 2B and 2C show conditions at the time of standard speed reproduction, at the time of high forward running speed reproduction and at the time of high backward running speed reproduction, respectively. Assuming now the case of an NTSC type magnetic recording/reproducing apparatus as an example, then a sync signal 50-A decoded from a reproduction signal is a signal with the frequency of 15.75 kHz and with the period of 63.5 μsec. Further, a band of about 10 MHz can be secured by using a high-frequency signal, for example, a 20 MHz signal, as the clock signal generated by the voltage-controlled oscillator 28. A signal 52-A is obtained by extending the high-frequency signal with respect to time. In this embodiment, there is shown the case where the period of the signal 52-A is 50 nsec. A signal 53-A is obtained by dividing the frequency of the high-frequency signal by 1270. In this embodiment, there is shown the case where the frequency of the signal 53-A is 20 MHz÷1270=15.75 kHz. As described above, the control system operates to make the phases of the signals 50 and 53 coincident with each other, so that a phase-comparison error signal 54 is fed back to the voltage-controlled oscillator 28 through the adder 29.

Referring to Fig. 2B, the case of the +60-fold speed will be described below as an example. Because the head speed relative to the tape running speed is reduced at the time of forward high-speed reproduction, reproduction frequency is lowered apparently. The frequency change of a sync signal 50-B is obtained by substituting $\alpha$=1.5 (value in a standard mode), N=60 and L=262.5 (the number of scanning lines in one field) into the following equation.

$$\Delta v = -\alpha \times (N-1)/L \qquad (1)$$

That is, the frequency of a sync signal 50-B is lowered by 33.7 % as follows.

$$\Delta v = -0.337$$

On the contrary, in the case of backward 60-fold speed reproduction, the value of the equation (1) is obtained by substituting N=-60 thereinto.

$$\Delta v = 0.339$$

That is, the frequency of the sync signal is increased by about 34 % as represented by the numeral 50-C in Fig. 2C.

As described above, a very clear distinction of the apparatus according to the present invention from the conventional apparatus is in the point in which the time axis is converted by using a small-capacity memory without any change of the rotational speed of the rotary head (or in a narrow change range, for example, of about 10 % in which a synchronous circuit of the television set can be pulled in even if the rotational speed were changed). The distinction will be described below in detail. Assume now that the rotary head frequency is not changed.

In the case of the +60-fold speed, the frequency of the reproduced sync signal is lowered as shown in Fig. 2B. The reel control circuit 37 instructs the voltage generating circuit 38 to generate a lower voltage in accordance with the lowering of the frequency of the sync signal. Accordingly, the level of the output signal 55 of the adder 29 is lowered, so that the oscillation frequency of the voltage-controlled oscillator 28 is lowered.

On the contrary, in the case of backward high-speed reproduction (-60-fold speed), the frequency of the reproduced sync signal is increased as shown in Fig. 2C. The reel control circuit 37 instructs the voltage generating circuit 38 to generate a higher voltage in accordance with the increase of the frequency of the sync signal. Accordingly, the level of the output signal 55 of the adder 29 is increased, so that the oscillation frequency of the voltage-controlled oscillator 28 is increased. As a result, the ratio of the frequency of the high-frequency clock signal 51 to the frequency of the sync signal is always kept constant in accordance with the reproduction speed. That is, the number of high-frequency clock pulses for covering the space between one sync signal pulse to the next sync signal pulse is always constant (1270 in this embodiment), so that the number of signal data written in the memory 32 in synchronism with the clock signal 51 always takes a constant value of 1270 per one scanning line. It is to be understood that a signal constant in the sync signal frequency can be obtained when the signal data are read in synchronism with the constant read clock signal (outputted from the oscillation circuit 35).

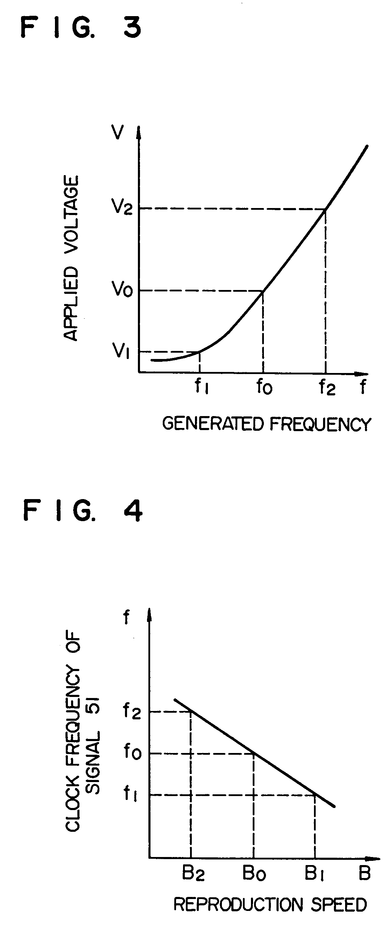

These operations are shown qualitatively as follows. The relation of the oscillation frequency with the applied voltage (the change of the signal 51 in accordance with the change of the signal 55) is as shown in Fig. 3 in the case where a general variable-capacity diode oscillator is taken as an example. In the drawing, the reference symbols $V_0$, $V_1$ and $V_2$ represent voltages of the signal 55 at the time of standard reproduction, at the time of forward 60-fold speed reproduction and at the time of backward 60-fold speed reproduction, respectively.

The reference symbols $f_0$, $f_1$ and $f_2$ represent frequencies of the clock signal 51 in accordance with the operation modes, respectively.

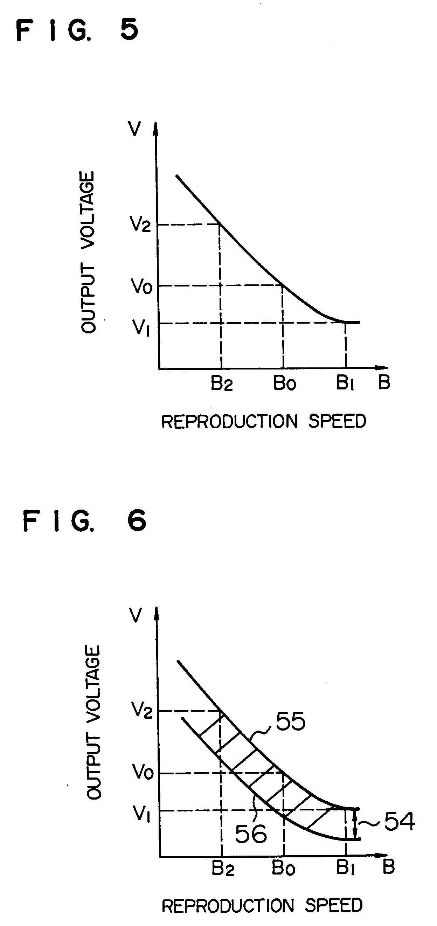

Fig. 4 shows clock frequency required in accordance with the reproduction speed.

In the drawing, the reference symbols $B_0$, $B_1$ and $B_2$ represent reproduction speeds at the time of standard reproduction, at the time of forward 60-fold speed reproduction and at the time of backward 60-fold speed reproduction, respectively.

The reference symbols $f_0$, $f_1$ and $f_2$ represent frequencies the same as in Fig. 3.

Fig. 5 shows output characteristic required of the adder 29. In the drawing, the coordinates $(B_0, V_0)$, $(B_1, V_1)$ and $(B_2, V_2)$ represent the relationships between the reproduction speed and the output voltage (signal 55) at the time of standard reproduction, at the time of forward 60-fold speed reproduction and at the time of backward 60-fold speed reproduction, respectively.

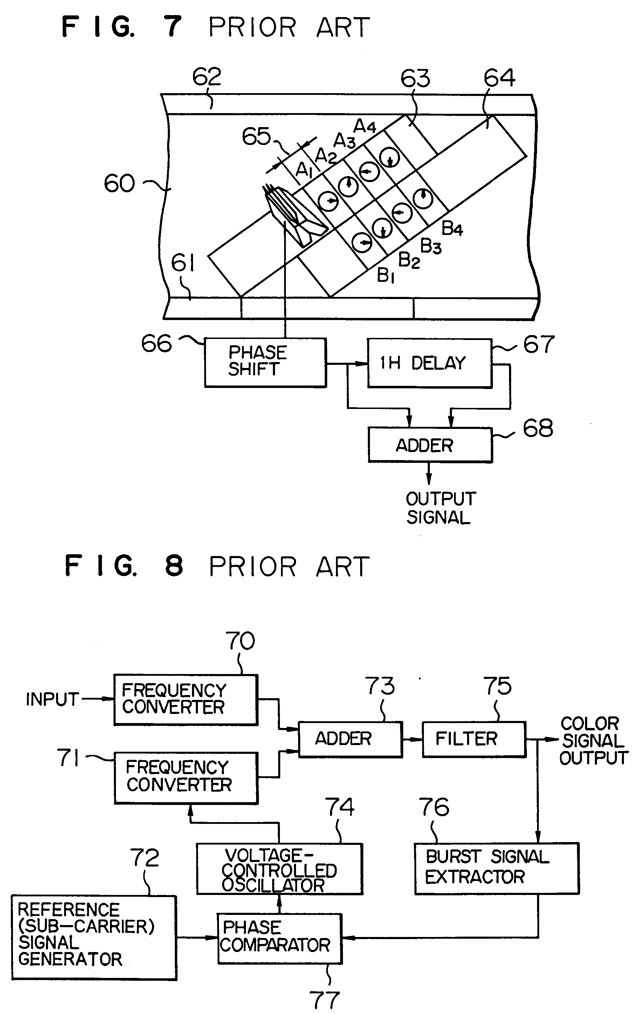

Fig. 6 shows that the signal 55 is a signal of summation of the signals 54 and 56. In the drawing, the oblique line portion represents the relationship between the signal voltage 54 obtained from the phase-locked portion and the addition output (signal 56) with respect to the voltage generating circuit 38. The signal 54 represents a voltage required to keep the phase relation between the signals 50 and 53 constant.

It is a matter of course that the operations of the reel control circuit 37 and the voltage generating circuit 38 can be realized easily by a system controller, an exclusive-use micro-processor or the like.

In the following, color signal processing in the time-axis conversion in the present invention will be described.

Color signal processing used generally will be explained to facilitate the understanding of the present invention.

Fig. 7 shows VHS type color signal processing used generally, for example, as described in the literature (Minoru Inazu et al: "Recording and Reproduction of Image", Corona Co.: pp. 408-411) and so on. In Fig. 7, the reference numeral 60 designates a magnetic tape; 61, a control track; 62, an audio track; 63 and 64, video tracks adjacent to each other; 66, a phase shifting circuit; 67, a 1H (one horizontal synchronization period) delay circuit; and 68, an adder. In the drawing, the arrows enclosed in circles represent phases of color signals recorded, respectively. Further, the reference numeral 65 designates a horizontal synchronizing signal interval (1H) in the recorded signal. As shown in the drawing, the rotational directions of color signal phases in adjacent tracks are reverse to each other and the color signal phases are shifted by 90 degrees per one horizontal synchronization (1H) period. At the time of reproduction, adjacent interference components are removed by adding a current signal to a previous signal before 1H time while shifting the phase of the current signal in a direction reverse to the direction at the time of recording.

Further, Fig. 8 is a diagram for explaining a color phase stabilizer (the aforementioned literature: p. 205). This stabilizer is provided as a stage posterior to the block of Fig. 7 in order to obtain a color reference (color sub-carrier) signal which is phase-synchronized with a reproduced color signal containing a lot of time-axis change components and is stable. In the drawing, the reference numerals 70 and 71 designate frequency converters; 72, a reference (sub-carrier) signal generator; 73, an adder; 74, a voltage-controlled oscillator; 75, a filter circuit (hereinafter referred to as "filter"); 76, a burst signal extractor; and 77, a phase comparator. The produced signal is subjected to processing as shown in this drawing in order to extract a color signal therefrom and, at the same time, time-axis change error components are corrected (though the range of correction is a very small range, for example, of 1 μsec at the maximum). First, an input signal is converted into a sub-carrier band (about 3.58 MHz) signal by the frequency converter 70 and then the resulting signal and a signal outputted from the frequency converter 71 and containing time-axis change components are added by an adder 73 to thereby cancel the change components selectively. A burst signal extracted by the burst signal extractor 76 from a color signal filtrated by the filter 75 contains time-axis change components. The time-axis change is detected as a phase error voltage through phase comparison in the phase comparator 77 with respect to the reference signal (outputted from the frequency converter 71). This voltage is converted into a frequency signal by the voltage-controlled oscillator 74 and further converted into a sub-carrier band (about 3.58 MHz) signal by the frequency converter 71 in the aforementioned manner so that the sub-carrier band signal is fed back. In this manner, the time-axis change in accordance with running of the magnetic tape is removed to a certain degree. This control is however feedback control, so that a time of a certain degree is required for fulfilling an effect. When, for example, the control is once disordered by disturbance, a time equivalent to about 7-10 scanning lines (7H - 10H) is required for returning the disordered control to a normal state. In the case of very-low-speed searching reproduction used conventionally, the distance from a noise bar to the next noise bar is secured to make such returning possible, but the conventional reproduction is ineffective to very-high-speed reproduction which is a target of the present invention. The following processing in the present invention is therefore required.

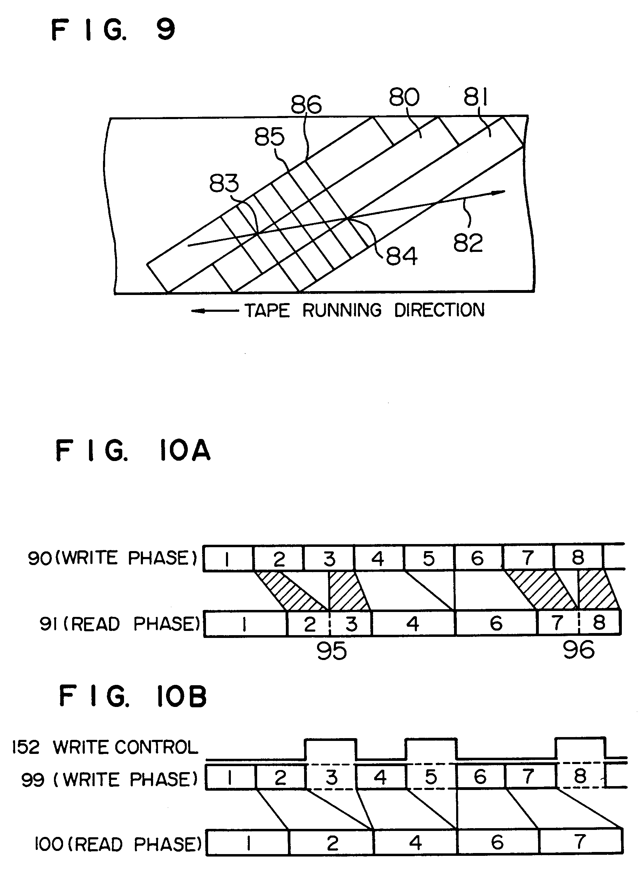

Fig. 9 shows the case of track jumping at the time of high-speed reproduction. When the tape runs at a high speed, the locus of the head is as represented by the reference numeral 82. In Fig. 9, the reference numerals 80 and 81 designate tracks to be subjected to reproduction continuously with respect to time at the time of high-speed reproduction. In practical use, azimuth recording and so on must be considered but a simple example is shown briefly in Fig. 9. The reference numerals 83 and 84 designate track jump points; and 85 and 86, horizontal synchronizing signals recorded. As shown in the drawing, at the time of high-speed reproduction, track jumping occurs frequently in a short time. At this time, the relation in which color phases are shifted by 90 degrees in the forward and backward directions respectively becomes lost. This phenomenon occurs whenever track jumping occurs, so that it causes color error.

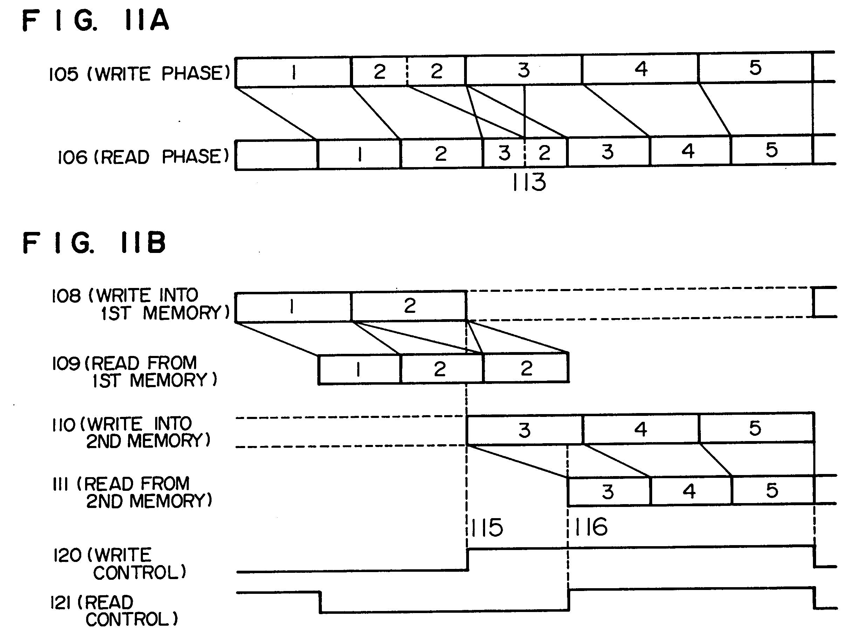

To solve this problem, first, the timing of writing data into the memory 32 (Fig. 1) used in the present invention is controlled. Referring to Figs. 10A, 10B, 11A and 11B, the timing at the time of forward/backward 60-fold speed reproduction will be described by way of example. First, the reference numerals 90 and 91 (Fig. 10A) designate one-line's memory write and read phases based on scanning line numbers, respectively.

The transverse axis represents time. As shown in Fig. 2C, the frequency of the signal reproduced at the time of backward reproduction becomes higher than the display frequency (signal 50-A in Fig. 2A) for display, so that the horizontal synchronization detection period is shortened. A signal is written in the memory 32 in the shortened period. At the time of display, the signal thus written in the shortened period is read in a slow period to make the frequency of the signal coincident with the display frequency for display. Because video data different in line number are written in one memory successively and at the same time the video data are read from the memory successively, the read phase overtakes the write phase in the middle if the read period is slower than the write period. That is, as represented by the reference numerals 95 and 96, before line No. 2 data which does not have been read yet is read, the memory is rewritten by the next line data (line No. 3 data) so that the second line data and the third line data are connected to each other in the middle of the currently read line to thereby bring a change of an image.

This is an undesirable operation not only from the point of view of color signal continuity described preliminarily but from the point of view of memory control. This is because memory writing and memory reading are carried out simultaneously at the time points 95 and 96 so that the operation in this occasion may be unwarrantable in accordance with the memory. To avoid this operation, memory control is carried out to make the write phase coincident with the read phase as represented by the reference numerals 99 and 100 in Fig. 10B. That is, in the case where an undesirable overtaking phenomenon may occur as represented by the reference numerals 95 and 96, the operation of writing the current line data in the memory is stopped. For example, in the case of Fig. 10B, writing of the third-, fifth- and eighth-line data is stopped. Such control can be achieved on the basis of a signal 152 which serves to stop writing of data in the line memory when occurrence of the overtaking phenomenon in the middle of reading is predicted from comparison between the write phase and the read phase. A circuit for carrying out this control will be described later.

In the following, forward high-speed reproduction will be described. Fig. 11A shows the outline of control at the time of forward reproduction. In the drawing, the reference numerals 105 and 106 designate read and write phases respectively, which have a relation with each other at the time of high-speed reproduction. At the time of forward reproduction, a signal reproduced in the course reverse to that at the time of backward reproduction has a frequency lower than the display frequency (signal 50-A in Fig. 2A) for display as shown in Fig. 2B, so that the horizontal synchronization detection period is elongated. A signal is written in the memory 32 in the elongated period. At the time of display, the signal thus written in the elongated period is read in a rapid period to make the frequency of the signal coincident with the display frequency far display. Because video data different line number are written in one memory successively and at the same time the data are read from the memory successively, the read phase overtakes the write phase if the read period is faster than the write period. That is, as represented by the reference numeral 113, before the second-line data once read is rewritten by the third-line data, the read phase overtakes the write phase so that a phenomenon of restarting data reading occurs from the point of time of the overtaking of the second-line data.

Referring to Fig. 11B, an example in which two memories, that is, first and second memories, are provided to overcome the aforementioned phenomenon will be described. In the drawing, the reference numerals 108 and 109 designate phases for writing data into the first memory and reading data from the first memory respectively; 110 and 111, phases for writing data into the second memory and reading data from the second memory respectively; 115 and 116, time points for switching the first and second memories; and 120 and 121, write and read control signals respectively. Up to the time point 115, writing of data into the first memory is carried out. After the time point 115, writing of data into the first memory is stopped so that writing of data into the second memory is started. Because writing of data into the first memory is stopped, the read phase never overtakes the write phase in the middle. Then, at the time point 116, reading is shifted from the first memory to the second memory. After a while, reading is shifted from the second memory to the first memory again (though the procedure to this point is not shown). These controls are performed, for example, on the basis of signals 120, 121, etc. Assuming now that each of the memories is allowed to be subjected to writing and reading when the potential (level) thereof is low, then the first memory can be controlled on the basis of the signals 120 and 121 and the second memory can be controlled on the basis of signals having phases opposite to the phases of the signals 120 and 121 respectively. An embodiment to make these controls possible will be described below in detail.

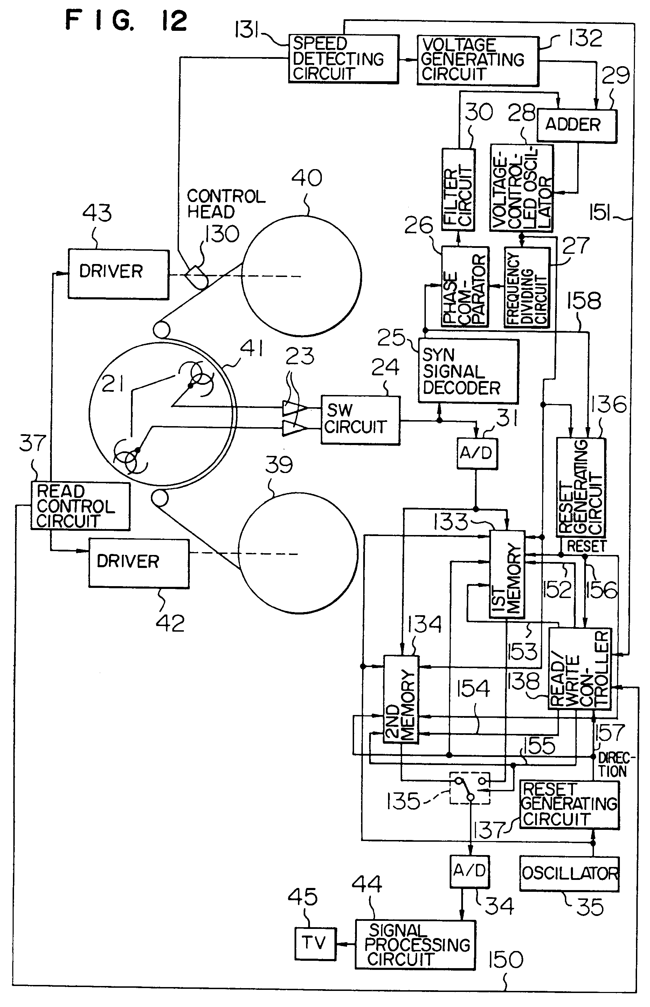

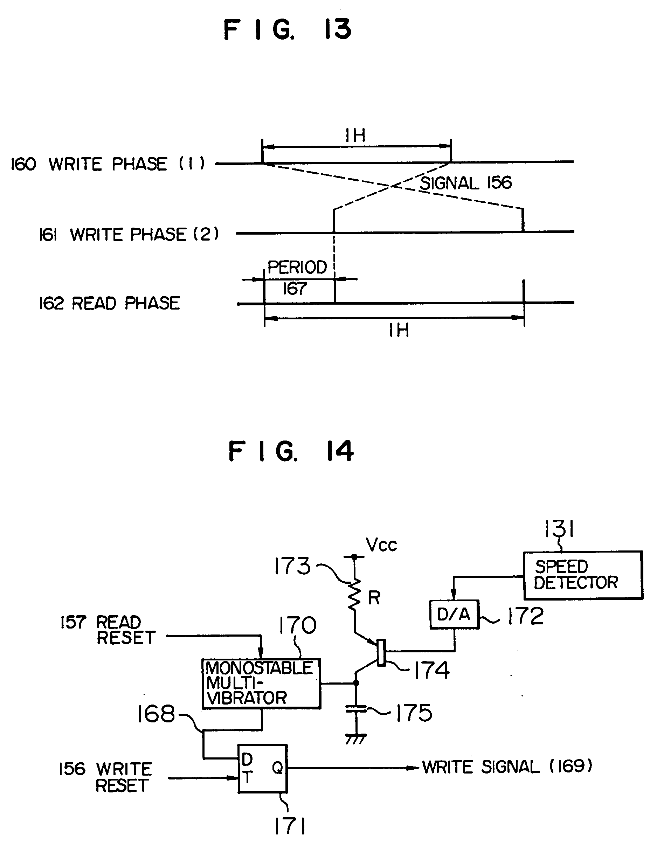

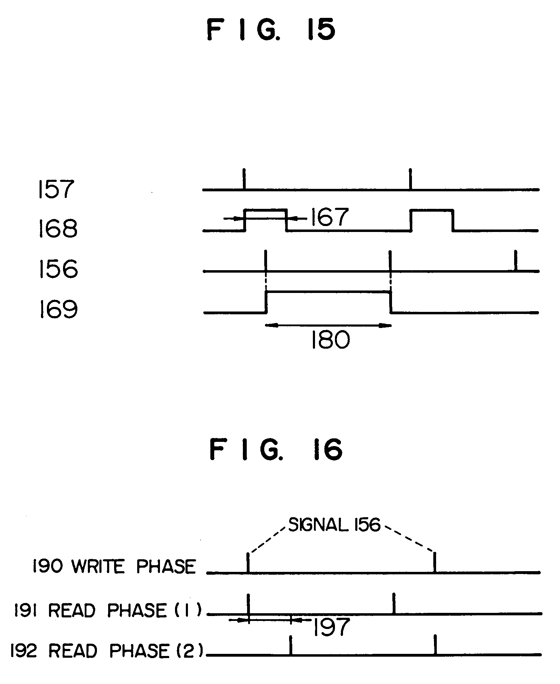

Fig. 12 is a block diagram for explaining another embodiment of the present invention. In the drawing, the reference numeral 130 designates a control head; 131, a speed detecting circuit; 132, a voltage generating circuit; 133 and 134, first and second memories respectively; 135, a switching circuit; 136 and 137, (memory address) resetting circuits respectively; and 138, a read/write controller. Other parts like the parts in the embodiment of Fig. 1 are referenced by like numerals. Further, the reference numerals 150 to 157 designate electric signals. Although this embodiment shows the case where data of the tape running speed with respect to the tape 41 is obtained by periodic measurement of a control signal reproduced by the control head 130, the invention can be applied to the case where the data is obtained from the reel control circuit 37 in the same manner as in the previous embodiment. The most characteristic control in this embodiment is carried out by the read/write controller 138. With respect to clock pulse signals for the two memories, the write side and the read side use a signal from the voltage-controlled oscillator 28 and a signal from the oscillation circuit 35 respectively in the same manner as in the previous embodiment. Further, with respect to reset generation for each line (1H), the write side and the read side use synchronization with a reproduced sync signal and a signal obtained by counting the output pulses of the oscillation circuit 35 respectively in the same manner as in the previous embodiment. The point at issue is how to generate signals 152 to 155. The signals 152 to 155 are a first memory write signal, a first memory read signal, a second memory write signal and a second memory read signal, respectively. These signals are generated on the basis of a tape running direction signal 150, a speed detection signal 151, a write reset signal, a read reset signal, etc. Among these, the reproduction speed signal may be obtained by monitoring the respective periods of the write and read reset signals as a substitute for the reproduction speed signal. First, backward reproduction will be described below. In backward reproduction, the frequency of the reproduced signal is increased. The horizontal synchronizing signal 158 is used also as a reset signal at the time of writing of data into the first and second memories, so that the reset period becomes longer than the memory read period (which is constant regardless of the reproduction speed). Fig. 13 shows a condition for occurrence of the overtaking phenomenon in read and write phases. In Fig. 13, the reference numerals 160 and 161 designates write phases; 162, a read phase; and 167, a difference between the write period and the read period. As shown in the drawing, the write speed is higher than the read speed, overtaking occurs necessarily in the case where there is the phase relation in which writing is started in the period 167 with respect to the read phase 162. In this case, a state as represented by the reference numerals 95 and 96 in Fig. 10A is established. Here, writing is preferably stopped for the one-line (1H) period. Because the period 167 is determined to a predetermined value in accordance with the reproduction speed, the difference between the speed for reading data from the memory and the speed for writing data into the memory is monitored by the read/write controller 138 so that writing is stopped when reading and writing are started simultaneously. To judge whether a point of starting of the write signal is present in the predetermined period 167 or not, a micro-processor may be used or, for example, a circuit shown in Fig. 14 may be used. In the drawing, the reference numeral 170 designates a monostable multivibrator; 171, a D flip-flop; 172, a digital-to-analog converter (D/A converter); 173, a resistor; 174, a transistor; 175, a capacitor; 156, 157, reset signals as shown in Fig. 12; and 168 and 169, electric signals. The waveform view of this circuit is as shown in Fig. 15. The final output 169 is used as the first memory write signal 152 or the second memory write signal 154 (low potential: writing). Because one memory is enough as the memory at the time of backward reproduction as described above, either first memory or second memory is used. When, for example, the first memory is used, the level of the signal 153 is low and the levels of the signals 154 and 155 are high. The operation of the circuit up to the time point of outputting of the signal 169 will be described below in brief. First, the speed detector 131 measures the reproduction speed and generates digital data corresponding to the speed. The data is converted into a voltage by the D/A converter 172 so that the capacitor 175 is charged with a current determined on the basis of the value R of the resistor 173 by the transistor 174. The quantity of the current gives the operating period (167) of the monostable multivibrator 170. Sampling is performed with this signal as data and with the signal 156 as a trigger to thereby obtain a signal 169. When the signal 169 is used as the signal 152, the period 180 is set to be equal to the pulse width of the signal 152 in Fig. 10B.

Next, forward high-speed reproduction will be described below. In this case, the frequency of a reproduced signal (inclusive of a sync signal) is decreased reversely to the case of backward reproduction. Accordingly, as shown in Fig. 11A, the phenomenon in which the read phase overtakes the write phase occurs. A condition in this case is shown in Fig. 16. In the drawing, the reference numeral 190 designates a write phase; 191 and 192, read phases; and 197, a difference between the write period and the read period. When the point of starting of the write phase is present in the period 197, the write phase is overtaken by the read phase.

In this case, controlling is performed so that data read previously is read again.

Specifically, the difference between the write speed and the read speed is monitored by the read/write controller 138 so that controlling is performed to switch the memories in order to apply reading and writing to the memories separately when reading and writing are started simultaneously.

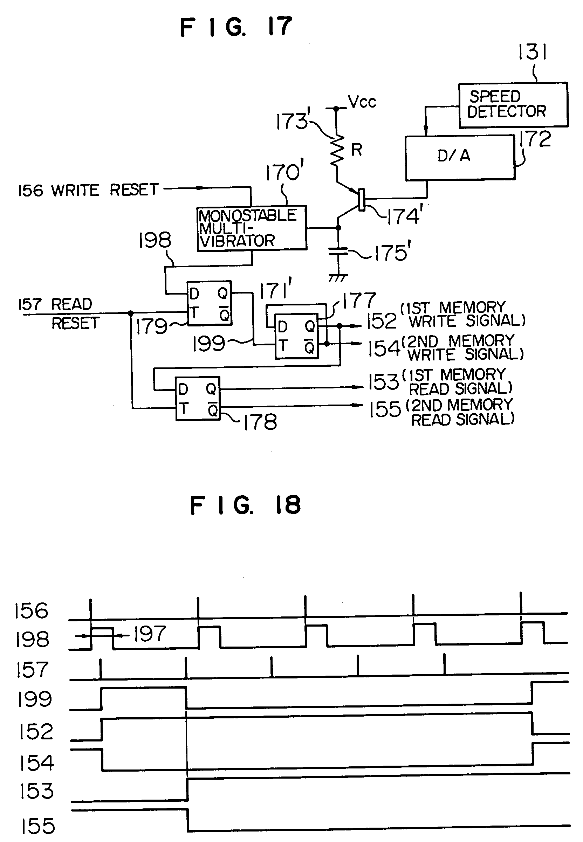

Fig. 17 shows a practical example of a circuit for generating signals for controlling memory groups, and Fig. 18 shows waveforms of the signals. The operation of the circuit will be described below in brief. In the drawing, the reference numerals 170' and 171' designate a monostable multivibrator and a D flip-flop respectively having functions equal to those of the monostable multivibrator 170 and the D flip-flop 171 in Fig. 14. The reference numerals 198 and 199 designate electric signals; 177, a T flip-flop; and 178, a D flip-flop. The operating time of the monostable multi-vibrator 170' is changed by controlling the quantity of a current to charge the capacitor 175' therewith in accordance with the reproduction speed in the same manner as in the previous embodiment. Assume now that high-speed reproduction is carried out at a constant speed. The signal 198 is sampled on the basis of the signal 157 by the flip-flop 179 to thus obtain a signal 199. Overtaking occurs when the level of this signal becomes high. Therefore, a signal as inverted at its rising edge is generated by the T flip-flop 177, so that this signal is made a first memory write signal 152 and the reverse phase signal is made a second memory write signal 154. Further, in order to switch reading of data from the memories, the signal 152 is sampled in the timing of the signal 157 to thus obtain a first memory read signal 153 and a second memory read signal 155. In this manner, signal discontinuity in the middle of horizontal synchronization (H), caused by the read/write overtaking phenomenon, can be avoided.

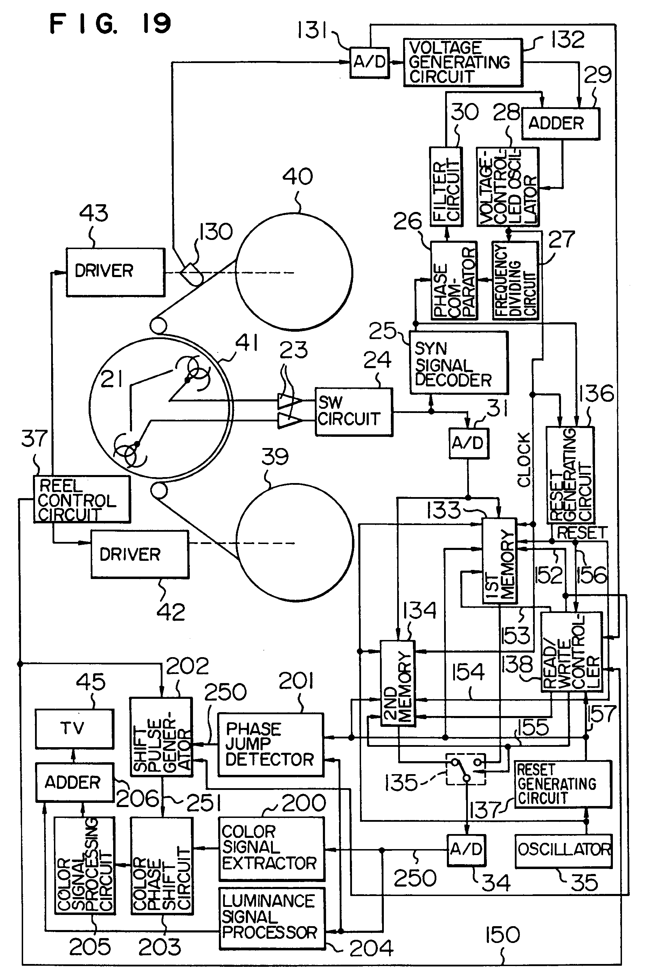

In the following, an embodiment in which the relation of shifting color signal phases by 90 degrees in accordance with a horizontal synchronizing signal at the time of high-speed reproduction is maintained will be described with reference to the block diagram of Fig. 19. In the drawing, the reference numeral 200 designates a color signal extractor; 201, a phase jump detector; 202, a shift pulse generator; 203, a color phase shift circuit; 204, a luminance signal processor; 205, a color signal processing circuit; and 206, an adder. Other parts like the parts in the previous embodiments are referenced by like numerals. Further, the reference numerals 250 and 251 designate electric signals.

The operation of this embodiment will be described below in brief. First, time-series data (as an analog signal) comprising cancelled lines which were not written at the time of backward running or repeatedly read lines in units of one line (scanning line) by the processing described above in the previous embodiments is applied to a color signal processing system and also to a luminance signal processing system. The signal applied to the latter is subjected to processing such as decoding by the luminance signal processor 204. A color signal is extracted by the color signal extractor 200 and fed to the color phase shift circuit 203.

The color phase is generally shifted by 90 degrees whenever the color signal advances by one line (1H). In this case, the shift pulse generator 202 generates shift pulses 251 so that one shift pulse per 1H is applied to the color phase shift circuit 203. Because the color phase is shifted by 90 degrees by application of one shift pulse 251, it is a matter of course that the color phase is shifted by 180 degrees by application of two shift pulses and that the color phase is shifted by 270 degrees by application of three shift pulses. If there is no shift pulse application, the phase is kept in the state in the previous line.

As described preliminarily with reference to Figs. 10B and 11B, data are read from the memories while cancelling (not writing) lines in the backward direction and while re-reading the same lines in the forward direction at the time of high-speed reproduction. Accordingly, shifting the phase by 180 degrees is required in the former and keeping the shift quantity in the previous line is required in the latter. Therefore, line cancelling or re-reading is detected by the phase jump detector 201 to make the shift pulse generator 202 generate shift pulses 251 in accordance with the detection result. This operation will be described on the basis of a more specific circuit structure.

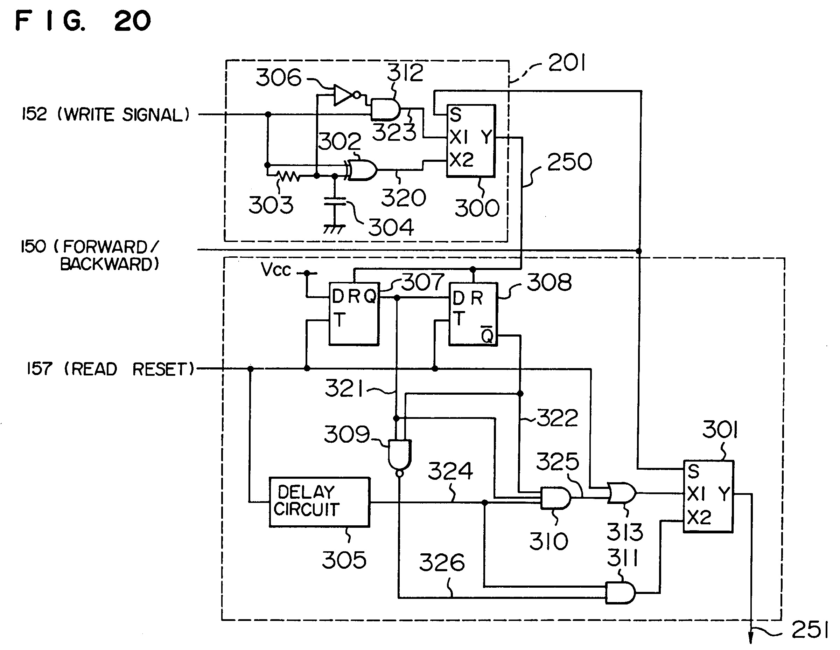

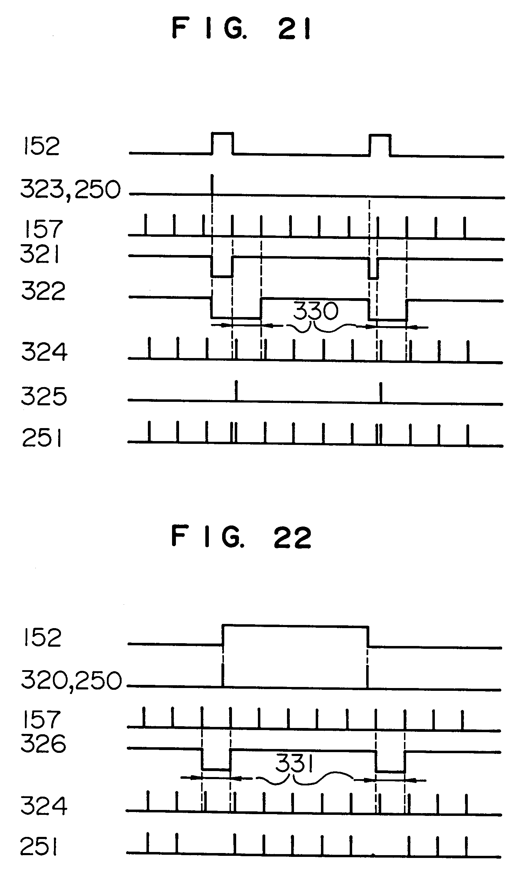

Fig. 20 is a block diagram showing the specific structure of the phase jump detector 201 and the shift pulse generator 202, and Figs. 21 and 22 are views of waveforms at important parts. In Fig. 20, the reference numerals 300 and 301 designate multiplexers; 302, an exclusive OR circuit; 303, a resistor; 304, a capacitor; 305, a delay circuit; 306, an invertor; 307 and 308, D flip-flops; 309, a NAND gate; 310, 311 and 312, AND gates; 313, an OR gate; and 320 to 326, electric signals. In Figs. 21 and 22, the reference numerals 330 and 331 designate time zones. Each of the multiplexers 300 and 301 has a switching input S which functions as follows.

When the level of the switching input S is low, $X_1 \rightarrow Y$ is carried out.

When the level of the switching input S is high, $X_2 \rightarrow Y$ is carried out.

The level of the switching input S becomes high in the forward direction and becomes low in the backward direction.

First, in backward high-speed reproduction, the level of the switching input S becomes low, so that a short pulse signal 323 (Fig. 21) at the rising edge of the signal 152 is obtained in a signal line 250 through the multiplexer 300. The Q output of the D flip-flip 307 which is reset on the basis of this signal 323 and triggered by the signal (read reset signal) 157, is made a signal 321.

An inverted signal $\overline{Q}$ obtained when triggered by the signal 157 is made a signal 322. These signals and a signal 324 obtained by delaying the signal 157 for a short time by the delay circuit 305 are ANDed by the AND gate 310 to thus obtain a signal 325 in which pulses are generated for the cancelled line. That is, a signal (output of the OR gate 313) in which one pulse is provided for a general line and in which two pulses are provided for the cancelled line (time zone 330), is transmitted to the output 251 of the multiplexer 301. As a result, a signal in which the color phase passes 90° but is shifted by 180°is obtained.

Next, in forward high-speed reproduction, the switching input S becomes high, so that the $X_2$ input of the multiplexer 300 or 301 is transmitted to the Y output. Accordingly, a signal 320 (Fig. 22) having short pulses at the two edges of the signal 152 is exhibited as the output 250 of the multiplexer 300. As described preliminarily, generation of the pulse signal 152 is carried out when information in the same line is repeatedly read. After generation of the pulse signal, signals 321 and 322 are obtained in the same manner as in the case of backward reproduction, so that the level of the output signal 326 of the NAND gate 309 becomes low in the time zone 331. This signal and a signal 324 (obtained by delaying the signal 157 for a short time by the delay circuit 305) are ANDed by the AND gate 311. Then, the resulting signal is applied to the multiplexer 301 to thus obtain a signal 251 finally. The signal 251 is a signal in which pulses are erased at the time of overlapping of lines so that the same phase shift as that in the previous line is obtained again in the posterior stage (of this circuit block).

Although this embodiment has been described upon the case where the color phase shift is improved at the time of high-speed reproduction, the invention can be applied to an operation of substituting the previous line information for a current signal at the time of slow-motion reproduction or in the case where signal missing occurs in every line or in the like case.

Although the aforementioned embodiment has shown the case where the present invention is carried out before a reproduced signal is separated into luminance (Y) and color (C), it is a matter of course that the present invention can be carried out after the separation.

That is, after separation into a luminance signal and a color signal, line data can be processed through line memories provided separately.

Although the embodiment has described upon the case of reel motor driving type high-speed reproduction, it is a matter of course that the invention can be applied to the case of capstan driving type high-speed reproduction using a capstan motor because conditions are quite equal.

In the aforementioned embodiment, the head rotational frequency is set to be equal to that at the time of recording. The point aimed at by this is to keep the vertical synchronization frequency of a reproduced signal constant to thereby secure vertical synchronization pull-in of the television set. If the case where the reproduction speed becomes higher is considered, it is hard to attain a sufficient effect by using time-axis conversion due to memories singly. Assuming now 100-fold speed reproduction, then the quantity of the frequency change in accordance with the speed is calculated on the basis of the equation (1) as follows.

$$\Delta v = 0.57$$

The oscillation frequency range of the voltage-controlled oscillator required for applying time-axis conversion to this must be extended to a huge range of about ±60 %. In the case of an oscillator having 20 MHz as a center value at the same speed as that at the time of recording, this fact is equivalent to the fact that about 32 MHz at maximum is required. Therefore, when a part of necessary time-axis conversion is covered by the rotational speed change of the rotary head (of course, about 10 % to make vertical synchronization leading-in of the television set possible) and the residual part is supplied by the embodiment of the present invention, the range of use can be widened more greatly. The configuration required in this case is, for example, obtained by adding a detector for detecting the tape running speed and a circuit for changing the rotational frequency of the rotary head in accordance with the detected tape running speed to the configuration as shown in Figs. 1 and 12.

In this case, data from the reel control circuit 37 to the voltage generating circuit 38 or data from the speed detecting circuit 131 to the voltage generating circuit 132 is changed. This applied embodiment can be also realized easily when it is constituted by a microprocessor, etc.

**Claims**

1.  A magnetic recording/reproducing apparatus using a helical scanning method of recording a video signal in a unit of one vertical synchronization signal of the video signal at a slant with respect to a turning direction of a magnetic tape by a rotating head, comprising:

     time-axis correction means including a memory means (32; 133; 134) corresponding to at least one horizontal synchronization period for storing a reproduced signal by means (25, 26, 27, 28, 29, 30; 33) for writing the reproduced signal with a writing clock synchronized with a reproduced horizontal synchronization signal and means (35, 36; 138) for reading the reproduced signal from said memory means with a clock having a constant frequency; and
     control means (33, 36; 138) including means (170, 179) for comparing a phase for writing data into said memory means with a phase for reading data from said memory means and means (177, 178) for controlling stopping writing data and re-reading same data on the basis of a result obtained in said comparison, for canceling input/output signals into/from said memory means or re-reading same data with a unit of one horizontal synchronization period by said time-axis correction means so that a number of horizontal synchronization signals between vertical synchronization signals reproduced at high speed reproduction of said tape becomes almost identical to that at normal reproduction.

2. The magnetic recording/reproducing apparatus according to claim 1, wherein said control means includes:

   a read control means (33, 138) for dividing a frequency of said clock having a constant frequency and resetting a reading address of said memory means; and
   a write control means (36, 138) for generating a signal for resetting a writing address of said memory means in synchronism with said reproduced horizontal synchronizing signal.

3. The magnetic recording/reproducing apparatus according to claim 1, wherein said control means includes:

   means (138) for stopping writing of said memory means in synchronism with the reproduced horizontal synchronizing signal or in synchronism with write address resetting.

4. The magnetic recording/reproducing apparatus according to claim 1, wherein said control means includes:

   a phase detection means (170, 171) for detecting a phase of a read signal (157) and a phase of a write signal (156); and
   means for generating signals (152, 153, 154, 155) for controlling read/write of said memory means on the basis of said phase of said read signal and said phase of said write signal.

5. The magnetic recording/reproducing apparatus according to claim 1, wherein said memory means includes at least two, first and second, line memories.

6. The magnetic recording/reproducing apparatus according to claim 5, wherein said control means includes means for switching said first and second line memories so that writing operation into said second line memory is carried out when reading and writing are started simultaneously in said first line memory.

7. The magnetic recording/reproducing apparatus according to claim 1, further comprising means (201, 202, 203) for shifting a phase of a color signal in accordance with a line number read from said memory means.

8. The magnetic recording/reproducing apparatus according to claim 1, wherein said video signal to be on the magnetic tape consists of a luminance signal and a signal obtained by shifting a phase of a color signal by 90 degrees every one horizontal synchronization signal, and said magnetic recording/reproducing apparatus comprises color-phase-shift correction means (201, 202, 203) for shifting a phase of said color signal based on a number read out from a memory.

9. The magnetic recording/reproducing apparatus according to claim 1, wherein said color-phase-shift correction means includes means (Fig. 20) for performing controlling so that the phase is shifted by 180 degrees in the case where a line in which writing is stopped while the phase is not shifted in the case where data of the same line is to be re-read.

10. A magnetic recording/reproducing apparatus according to claim 1, wherein

    said time-axis correction means include central-frequency-control means (38, 132) for controlling a central frequency of a writing-clock signal by speed detection means (37; 130, 131) of said tape, writing-clock generation means (25, 26, 27, 28, 29, 30; 33) for putting a writing-clock signal controlled by said central-frequency-control means (38; 132) into a condition in which said writing-clock signal is synchronized with a reproduced horizontal synchronization signal, the timing of said memory means (32; 133, 134) is controlled by an output from said writing-clock generation means for storing a reproduced signal corresponding to at least one horizontal synchronization period.

11. A magnetic recording/reproducing apparatus according to claim 1 using a helical scanning method of recording a luminance signal and a color signal whose phase is shifted by 90 degrees every one horizontal synchronization signal in a unit of one vertical synchronization signal of a video signal at a slant with respect to a running direction of a magnetic tape by a rotating head, comprising:

color-phase-shifting correction means (201, 202, 203) for correcting a phase shift on a signal which is supplied to color-signal demodulation means (205) for demodulating a color signal in said data output from said memory means every one horizontal synchronization signal according to a signal indicating a fact that said data was canceled or re-read in a unit of one horizontal synchronization period by said control means.

**Patentansprüche**

1. Magnetische Aufzeichnungs-/Wiedergabevorrichtung unter Verwendung eines Schrauberlinien-Abtastverfahrens zum Aufzeichnen eines Videosignals in einer Einheit eines vertikalen Synchronisationssignales des Videosignals mit einer Neigung im Bezug auf eine Laufrichtung eines Magnetbandes durch einen Drehkopf, umfassend:

   Zeitachsen-Korrektureinrichtung mit einer Speichereinrichtung (32; 133; 143) entsprechend mindestens einer horizontalen Synchronisationsperiode zum Speichern eines Wiedergabesignals durch Mittel (25, 26, 27, 28, 29, 30; 33) zum Schreiben des Wiedergabesignals mit einem Schreibtakt synchron mit einem wiedergegebenen horizontalen Synchronisationssignal und Mitteln (35, 36; 138) zum Lesen des Wiedergabesignals von der Speichereinrichtung mit einem Takt von einer konstanten Frequenz;

   Steuermittel (33, 36; 138) mit Mitteln (170, 179) zum Vergleichen einer Phase zum Schreiben von Daten in die Speichereinrichtung mit einer Phase zum Lesen von Daten aus der Speichereinrichtung und Mitteln (177, 178) zum Steuern des Anhaltens des Datenschreibens und erneutem Lesen der Daten auf der Grundlage eines Ergebnisses, das in dem Vergleich erhalten wird, zum Löschen von Eingangs/Ausgangssignalen in/aus der Speichereinrichtung oder zum erneuten Lesen der gleichen Daten mit einer Einheit einer horizontalen Synchronisationsperiode durch die Zeitachsenkorrektureinrichtung, so daß eine Anzahl von horizontalen Synchronisationssignalen zwischen vertikalen Synchronisationssignalen, die mit einer Hochgeschwindigkeitswiedergabe des Bandes wiedergegeben werden, fast identisch zu einer normalen Wiedergabe werden.

2. Magnetische Aufzeichnungs-/Wiedergabevorrichtung nach Anspruch 1, worin die Steuereinrichtung umfaßt:

   eine Lesesteuereirrichtung (33, 138) zum Teilen einer Frequenz des Taktes, der eine konstante Frequenz hat, und zum Rücksetzen einer Leseadresse der Speichereinrichtung; und

   ein Schreibsteuermittel (36, 38) zum Erzeugen eines Signals zum Rücksetzen einer Schreibadresse der Speichereinrichtung synchron mit dem wiedergegebenen horizontalen Synchronisationssignal.

3. Magnetische Aufzeichnungs-/Wiedergabevorrichtung nach Anspruch 1, worin das Steuermittel umfaßt:

   Mittel (138) zum Anhalten des Schreibens der Speichereinrichtung synchron mit dem wiedergegebenen horizontalen Synchronisationssignal oder synchron mit dem Schreibadressenrücksetzen.

4. Magnetische Aufzeichnungs-/Wiedergabevorrichtung nach Anspruch 1, worin das Steuermittel umfaßt:

   eine Phasenerfassungseinrichtung (170, 171) zum Erfassen einer Phase eines Lesesignals (157) und einer Phase eines Schreibsignals (156); und

   Einrichtung zum Erzeugen von Signalen (152, 153, 154, 155) zum Steuern des Lesens/Schreibens der Speichereinrichtung auf der Basis der Phase des Lesesignals und der Phase des Schreibsignals.

5. Magnetische Aufzeichnungs-/Wiedergabevorrichtung nach Anspruch 1, worin die Speichereinrichtung mindestens zwei, erste und zweite, Zeilenspeicher umfaßt.

6. Magnetische Aufzeichnungs-/Wiedergabevorrichtung nach Anspruch 5, worin die Steuereinrichtung mindestens ein Mittel zum Umschalten der ersten und zweiten Zeilenspeicher umfaßt, so daß die Schreiboperation in den zweiten Zeilenspeicher ausgeführt wird, wenn das Lesen und das Schreiben gleichzeitig in dem ersten Zeilenspeicher begonnen worden ist.

7. Magnetische Aufzeichnungs-/Wiedergabevorrichtung nach Anspruch 1, weiterhin umfassend Mittel (201, 202, 203) zum Verschieben einer Phase eines Farbsignals in Übereinstimmung mit der Zeilennummer, die von der Speichereinrichtung gelesen wird.

**8.** Magnetische Aufzeichnungs-/Wiedergabevorrichtung nach Anspruch 1, worin das Videosignal auf dem Magnetband aus einem Luminanzsignal und einem Signal besteht, das durch Verschieben einer Phase eines Farbsignals um 90 Grad für jedes horizontale Synchronisationssignal erhalten wird, und die magnetische Aufzeichnungs-/Wiedergabevorrichtung Farbphasenverschiebungskorrekturmittel (201, 202, 203) umfaßt zum Verschieben einer Phase des Farbsignals auf der Grundlage einer Zahl, die von einem Speicher ausgelesen wird.

**9.** Magnetische Aufzeichnungs-/Wiedergabevorrichtung nach Anspruch 1, worin das Farbphasenverschiebungskorrekturmittel ein Mittel (Fig. 20) zum Durchführen der Steuerung umfaßt, so daß die Phase um 180 Grad verschoben wird in dem Fall, wenn eine Zeile, in welche eingeschrieben wird, angehalten wird, während die Phase nicht verschoben wird in dem Fall, wenn Daten in derselben Zeile gelesen werden sollen.

**10.** Magnetische Aufzeichnungs-/Wiedergabevorrichtung nach Anspruch 1, worin die Zeitachsenkorrektureinrichtung eine Mittenfrequenzsteuereinrichtung (38, 132) zum Steuern einer Mittenfrequenz eines Schreibtaktsignals durch Geschwindigkeitserfassungsmittel ( 37; 130, 131) des Bandes aufweist, Schreibtakterzeugungsmittel (25, 26, 27, 28, 29, 30; 33) zum Geben eines Schreibtaktsignals, das durch die Mittenfrequenzsteuereinrichtung (38; 132) gesteuert wird, unter einer Bedienung, in welcher das Schreibtaktsignal synchronisiert ist mit einem wiedergegebenen horizontalen Synchronisationssignal, wobei die Zeiteinteilung der Speichereinrichtung (32; 133, 134) gesteuert wird durch einen Ausgang von dem Schreibtakterzeugungsmittel zum Speichern eines wiedergegebenen Signals entsprechend mindestens einer horizontalen Synchronisationsperiode.

**11.** Magnetische Aufzeichnungs-/Wiedergabevorrichtung nach Anspruch 1, unter Verwendung eines Schraubenlinien-Abtastverfahrens zum Aufzeichnen eines Luminazsignals und eines Farbsignals, dessen Phase um 90 Grad für jedes horizontale Synchronisationssignal verschoben ist, in Einheiten eines vertikalen Synchronisationssignals eines Videosignals mit einer Neigung in Bezug auf eine Laufrichtung eines Magnetbandes durch einen Drehkopf, umfassend:

　　Farbphasenverschiebungskorrektureinrichtung (201, 202, 203) zum Korrigieren einer Phasenverschiebung auf einem Signal, welches einem Farbsignaldemodulationsmittel (205) zugeführt wird zum Demodulieren eines Farbsignals in dem Datenausgang von der Speichereinrichtung für jedes horizontale Synchronisationssignal entsprechend einem Signal, das die Tatsache anzeigt, daß die Daten gelöscht oder erneut gelesen wurden, in Einheiten einer horizontalen Synchronisationsperiode durch die Steuereinrichtung.

## Revendications

**1.** Appareil d'enregistrement/de reproduction magnétique utilisant un procédé d'enregistrement à balayage hélicoïdal d'un signal vidéo dans une unité d'un signal de synchronisation verticale du signal vidéo en biais par rapport à un sens d'avance d'une bande magnétique par une tête rotative, comprenant :

　　des moyens de correction de base de temps comprenant des moyens de mémoire (32 ; 133 ; 134) correspondant à au moins une période de synchronisation horizontale pour stocker un signal reproduit par des moyens d'écriture (25, 26, 27, 28, 29, 30 ; 33) du signal reproduit avec un signal d'horloge d'écriture synchronisé à un signal de synchronisation horizontale reproduit et des moyens de lecture (35, 36 ; 138) du signal reproduit en provenance desdits moyens de mémoire avec un signal d'horloge ayant une fréquence constante : et
　　des moyens de commande (33, 36 ; 138) comprenant des moyens de comparaison (170, 179) d'une phase d'écriture de données dans lesdits moyens de mémoire à une phase de lecture de données en provenance desdits moyens de mémoire et des moyens (177, 178) de commande d'arrêt d'écriture de données et de relecture des mêmes données sur la base d'un résultat obtenu dans ladite comparaison, d'annulation de signaux d'entrée/sortie vers/en provenance desdits moyens de mémoire ou de relecture des mêmes données avec une unité d'une période de synchronisation horizontale par lesdits moyens de correction de base de temps de sorte qu'un certain nombre de signaux de synchronisation horizontale, entre des signaux de synchronisation verticale reproduits à une reproduction à haute vitesse de ladite bande, devient presque identique à celui lors d'une reproduction normale.

**2.** Appareil d'enregistrement/de reproduction magnétique selon la revendication 1, dans lequel lesdits moyens de commande comprennent :

　　des moyens de commande de lecture (33, 138) pour diviser une fréquence dudit signal d'horloge ayant une fréquence constante et pour remettre à l'état initial une adresse de lecture desdits moyens de mémoire ; et

des moyens de commande d'écriture (36, 138) pour produire un signal pour remettre à l'état initial une adresse d'écriture desdits moyens de mémoire en synchronisation audit signal de synchronisation horizontale reproduit.

3. Appareil d'enregistrement/de reproduction magnétique selon la revendication 1, dans lequel lesdits moyens de commande comprennent :

des moyens (138) d'arrêt d'écriture desdits moyens de mémoire en synchronisation audit signal de synchronisation horizontale reproduit ou en synchronisation à ladite remise à l'état initial d'adresse d'écriture.

4. Appareil d'enregistrement/de reproduction magnétique selon la revendication 1, dans lequel lesdits moyens de commande comprennent :

des moyens de détection de phase (170, 171) pour détecter une phase d'un signal de lecture (157) et une phase d'un signal d'écriture (156) ; et
des moyens de production de signaux (152, 153, 154, 155) pour commander la lecture/écriture desdits moyens de mémoire sur la base de ladite phase dudit signal de lecture et de ladite phase dudit signal d'écriture.

5. Appareil d'enregistrement/de reproduction magnétique selon la revendication 1, dans lequel lesdits moyens de mémoire comprennent au moins deux, première et seconde, mémoires de ligne.

6. Appareil d'enregistrement/de reproduction magnétique selon la revendication 5, dans lequel lesdits moyens de commande comprennent des moyens pour commuter lesdites première et seconde mémoires de ligne de sorte qu'une opération d'écriture dans ladite seconde mémoire de ligne est exécutée lorsque la lecture et l'écriture sont démarrées en même temps dans ladite première mémoire de ligne.

7. Appareil d'enregistrement/de reproduction magnétique selon la revendication 1, comprenant de plus des moyens (201, 202, 203) de déphasage d'un signal couleur selon un nombre de lignes lu en provenance desdits moyens de mémoire.

8. Appareil d'enregistrement/de reproduction magnétique selon la revendication 1, dans lequel ledit signal vidéo devant être sur la bande magnétique est constitué d'un signal de luminance et d'un signal obtenu par déphasage d'un signal couleur de 90 degrés à chaque signal de synchronisation horizontale, et ledit appareil d'enregistrement/de reproduction magnétique comprend des moyens de correction de déphasage de couleur (201, 202, 203) pour déphaser ledit signal couleur sur la base d'un nombre lu en provenance d'une mémoire.

9. Appareil d'enregistrement/de reproduction magnétique selon la revendication 1, dans lequel lesdits moyens de correction de déphasage de couleur comprennent des moyens (figure 20) pour effectuer une commande de sorte que le déphasage est de 180 degrés dans le cas d'une ligne dans laquelle l'écriture est arrêtée tandis qu'il n'y a pas de déphasage dans le cas où les données de la même ligne devraient être relues.

10. Appareil d'enregistrement/de reproduction magnétique selon la revendication 1, dans lequel lesdits moyens de correction de base de temps comprennent des moyens de commande de fréquence centrale (38, 132) pour commander une fréquence centrale d'un signal d'horloge d'écriture par des moyens de détection de vitesse (37 ; 130, 131) de ladite bande, des moyens de production de signal d'horloge d'écriture (25, 26, 27, 28, 29, 30 ; 33) pour mettre un signal d'horloge d'écriture commandé par lesdits moyens de commande de fréquence centrale (38 ; 132) dans un état dans lequel ledit signal d'horloge d'écriture est synchronisé à un signal de synchronisation horizontale reproduit, le cadencement desdits moyens de mémoire (32 ; 133, 134) est commandé par une sortie en provenance desdits moyens de production de signal d'horloge d'écriture pour stocker un signal reproduit correspondant à au moins une période de synchronisation horizontale.

11. Appareil d'enregistrement/de reproduction magnétique selon la revendication 1, utilisant un procédé à balayage hélicoïdal d'enregistrement d'un signal de luminance et d'un signal couleur déphasé de 90 degrés à chaque signal de synchronisation horizontale dans une unité d'un signal de synchronisation verticale d'un signal vidéo en biais par rapport à sens d'avance d'une bande magnétique par une tête rotative, comprenant :

des moyens de correction de déphasage de couleur (201, 202, 203) pour corriger un déphasage sur un signal qui est amené vers des moyens de démodulation de signal couleur (205) pour démoduler un signal couleur dans ladite sortie de données en provenance desdits moyens de mémoire à chaque signal de synchronisation horizontale selon un signal indiquant un fait qui est que lesdites données ont été annulées ou relues dans une unité d'une période de synchronisation horizontale par les-

**EP 0 600 376 B1**

dits moyens de commande.

# F I G. I

# F I G. 2A

50-A PERIODIC SIGNAL

63.5 μ SEC

51-A HF CLOCK

52-A HF ENLARGED VIEW

50 n SEC

53-A FREQUENCY-DIVIDED WAVEFORM

# F I G. 2B

50-B PERIODIC SIGNAL

85 μ SEC

51-B HF CLOCK

52-B HF ENLARGED VIEW

67 n SEC

53-B FREQUENCY-DIVIDED WAVEFORM

# F I G. 2C

50-C PERIODIC SIGNAL

42 μ SEC

51-C HF CLOCK

52-C HF ENLARGED VIEW

33 n SEC

53-C FREQUENCY-DIVIDED WAVEFORM

# F I G. 3

V

APPLIED VOLTAGE

V2
Vo
VI

f1    fo    f2    f

GENERATED FREQUENCY

# F I G. 4

f

CLOCK FREQUENCY OF SIGNAL 51

f2
fo
f1

B2    Bo    B1    B

REPRODUCTION SPEED

# F I G. 5

REPRODUCTION SPEED

# F I G. 6

REPRODUCTION SPEED

# F I G. 7 PRIOR ART

PHASE SHIFT — 66

1H DELAY — 67

ADDER — 68

OUTPUT SIGNAL

# F I G. 8 PRIOR ART

INPUT

FREQUENCY CONVERTER — 70

FREQUENCY CONVERTER — 71

ADDER — 73

FILTER — 75

COLOR SIGNAL OUTPUT

VOLTAGE-CONTROLLED OSCILLATOR — 74

BURST SIGNAL EXTRACTOR — 76

REFERENCE (SUB-CARRIER) SIGNAL GENERATOR — 72

PHASE COMPARATOR — 77

F I G. 9

— TAPE RUNNING DIRECTION

F I G. IOA

90 (WRITE PHASE)

91 (READ PHASE)

95                                    96

F I G. IOB

152 WRITE CONTROL

99 (WRITE PHASE)

IOO (READ PHASE)

# F I G. IIA

105 (WRITE PHASE)

| 1 | 2 | 2 | 3 | 4 | 5 |

106 (READ PHASE)

| | 1 | 2 | 3 | 2 | 3 | 4 | 5 |

113

# F I G. IIB

108 (WRITE INTO 1ST MEMORY)

| 1 | 2 |

109 (READ FROM 1ST MEMORY)

| 1 | 2 | 2 |

110 (WRITE INTO 2ND MEMORY)

| 3 | 4 | 5 |

111 (READ FROM 2ND MEMORY)

| 3 | 4 | 5 |

115    116

120 (WRITE CONTROL)

121 (READ CONTROL)

EP 0 600 376 B1

# FIG. 12

# F I G.  13

160 WRITE PHASE ( 1 )

IH

SIGNAL 156

161 WRITE PHASE (2)

162 READ PHASE

PERIOD
167

IH

# F I G.  14

157 READ
RESET

170

MONOSTABLE
MULTI-
VIBRATOR

168

156 WRITE
RESET

D
T    Q

171

173

Vcc

R

131

SPEED
DETECTOR

D/A    172

174

175

WRITE SIGNAL (169)

# F I G. 15

157

168 ──167

156

169

180

# F I G. 16

SIGNAL 156

190 WRITE PHASE

191 READ PHASE (1)

197

192 READ PHASE (2)

# FIG. 17

131

SPEED DETECTOR

173'

Vcc

R

D/A   172

156 WRITE RESET

170'

MONOSTABLE MULTI-VIBRATOR

174'

175'

198

171'

157 READ RESET

D Q
T Q̄

179

177

D Q
T Q̄

199

152 (1ST MEMORY WRITE SIGNAL)

154 (2ND MEMORY WRITE SIGNAL)

D Q
T Q̄

178

153 (1ST MEMORY READ SIGNAL)

155 (2ND MEMORY READ SIGNAL)

# FIG. 18

156

198     197

157

199

152

154

153

155

F I G. 19

# FIG. 20

152 (WRITE SIGNAL)

150 (FORWARD/
BACKWARD)

157 (READ RESET)

EP 0 600 376 B1

# F I G. 21

152

323,250

157
321

322

330

324

325

251

# F I G. 22

152

320,250

157
326

331

324

251

# F I G. 23 PRIOR ART

# F I G. 24 PRIOR ART